# EUROPÄISCHE PATENTSCHRIFT

(11) **EP 3 865 258 B1**
(45) Veröffentlichungstag und Bekanntmachung des Hinweises auf die Patenterteilung: **20.12.2023**
(21) Anmeldenummer: 21151646.3
(22) Anmeldetag: 14.01.2021
(51) Int. Cl.: B25J 17/02, B25J 19/00, B25J 19/06

(54) **SICHERHEITSEINRICHTUNG**
SAFETY DEVICE
DISPOSITIF DE SÉCURITÉ

(30) Priorität: 11.02.2020 DE 102020103416
(43) Veröffentlichungstag der Anmeldung: 18.08.2021
(73) Patentinhaber: KLN Ultraschall AG, 64646 Heppenheim (DE)
(72) Erfinder: Klein, Roger, 64342 Seeheim-Jugenheim (DE); Fauth, Sascha, 68526 Ladenburg (DE)
(74) Vertreter: Habermann Intellectual Property Partnerschaft von Patentanwälten mbB

(56) Entgegenhaltungen:
- EP-A1- 2 065 144
- EP-A1- 2 190 634
- EP-B1- 2 065 144
- EP-B1- 2 190 634
- DE-C1- 19 620 195
- DE-U1-202013 105 501
- US-A- 4 872 718
- US-A1- 2018 207 811

## Beschreibung

Die Erfindung betrifft eine Sicherheitseinrichtung zur Kollisionsüberwachung eines mit einem Roboter in Wirkverbindung gebrachten/ bringbaren Endeffektors, wobei die Sicherheitseinrichtung zumindest eine Kinematik mit einem Roboterabschnitt, einer Verbindungsanordnung und einem Endeffektorabschnitt aufweist, wobei die Sicherheitseinrichtung mittels des Roboterabschnitts der Kinematik an dem Roboter festgelegt/ festlegbar ist, wobei an dem Endeffektorabschnitt der zumindest einen Kinematik der Endeffektor festlegbar ist, wobei der Endeffektorabschnitt mittels der Verbindungsanordnung der zumindest einen Kinematik so an dem Roboterabschnitt gelagert ist, dass der Endeffektorabschnitt in Relation zu dem Roboterabschnitt zumindest entlang eines Verlagerungsweges verlagerbar ist, wobei die Verbindungsanordnung der zumindest eine Kinematik der Sicherheitseinrichtung einen erste Verbindungsabschnitt mit einem ersten Verlagerungsweg und einen zweiten Verbindungsabschnitt mit einem zweiten Verlagerungsweg aufweist, wobei der erste Verlagerungsweg sich geradlinigen entlang einer ersten Verlagerungsachse erstreckt, wobei der zweite Verlagerungsweg sich geradlinig entlang einer zweiten Verlagerungsachse erstreckt und wobei die erste Verlagerungsachse und die zweite Verlagerungsachse senkrecht zueinander ausgerichtet sind und sich in einem Kreuzungspunkt schneiden, sodass durch die Verlagerungsachsen eine Horizontalebene der Sicherheitseinrichtung aufgespannt ist, wobei der Endeffektorabschnitt parallel zu der Horizontalebene verlagerbar ist und wobei die Sicherheitseinrichtung zumindest ein Sensorelement aufweist mittels dessen eine Verlagerung des Endeffektorabschnitts in Relation zu dem Roboterabschnitt detektierbar ist, sodass eine Kollision des Endeffektors mit einem Objekt, das einen von dem Roboterabschnitt abweichenden Bewegungsvektor aufweist, bestimmbar ist.

Roboter, insbesondere sogenannte Industrieroboter, werden seit mittlerweile mehreren Jahrzehnten in nahezu allen Bereichen der industriellen Produktion eingesetzt. Diese Roboter weisen üblicherweise eine Roboterarm auf, der an seinem einen Ende in einem Grundgestell gelagert ist und der an seinem anderen Ende einen Endeffektor aufweist, bzw. aufnehmen kann. Zwischen dem Grundgestell und dem Endeffektor weist der Roboterarm üblicherweise mehrere Lager auf, durch die Abschnitte des Roboterarms gelenkig und/ oder verdrehbar aneinander gelagert sind, sodass der Endeffektor innerhalb eines Bewegungsvolumens des Roboter in Relation zu dem Grundgestell verlagerbar ist. Typisch sind derartig ausgestaltete Roboter insbesondere als Montage-, Schweiß-, oder Handling-Roboter. Aufgrund der bestehenden Anforderungen an die Betriebssicherheit sowie der hohen Arbeitsgeschwindigkeiten und auftretenden Kräfte beim Betrieb derartiger Roboter, erfolgt ihr Einsatz nahezu ausnahmslos innerhalb sogenannter Käfige. Käfig bezeichnet dabei sowohl eine den Roboter umgebende physische Barriere als auch ein durch Sensoren überwachtes Volumen, dessen Betreten durch eine Person zur Notabschaltung des betreffenden Roboters führt.

Um industrielle Prozesse zu optimieren, wird es angestrebt, dass Menschen und Roboter kollaborativ zusammenarbeiten sollen. Mit den beschriebenen Robotern ist dies aus den genannten Gründen nicht möglich. Mensch-Roboter-Kollaboration (MRK) setzt voraus, dass die verwendeten Roboter über geeignete Sicherheitssysteme Verfügen, die eine Verletzung der mit ihnen kollaborierenden Personen verhindern. Aus dem Stand der Technik ist es bekannt, den Roboterarm mit Sensorelementen zu verkleiden, durch die eine Robotersteuerung detektieren kann, ob der Roboterarm mit einem Objekt oder einer Person kollidiert ist/ kollidieren wird, die einen von der Sensorfläche abweichenden Geschwindigkeitsvektor aufweist. Mit den bekannten Systemen ist es auch möglich, die Stärke eine Kollision zu bestimmen. So kann beispielsweise eine Kollision, die einen Nothalt des Roboters erforderlich macht, von einem "kleinen Rempler" unterschieden werden, der lediglich eine Verlangsamung und/ oder Richtungsänderung des Roboters erforderlich macht. Mit den bekannten Systemen ist es insbesondere auch möglich, Roboter durch Menschen anzulernen, indem der Roboterarm durch einen Menschen geführt wird.

Eine Herausforderung im Rahmen von MRK stellt nach wie vor der Endeffektor des Roboters dar. Ein gegenüber dem Rest des Roboters gesteigertes Gefahrenpotential ist bei den meisten Endeffektoren systemimmanent. Während auf den Roboterarm die oben beschriebenen Sensorelemente aufbringbar sind, so kann der überwiegende Teil der Endeffektoren nicht verkleidet werden, ohne ihre Funktionalität einzuschränken. Besonders deutlich wird dies bei schneidenden, schweißenden, greifenden, fräsenden oder ähnlichen Endeffektoren.

Aus dem Stand der Technik sind Systeme bekannt, bei denen die Endeffektoren mit Sensoren gekoppelt sind, die immer dann, wenn der Endeffektor eine Arbeitsposition erreicht hat, bzw. nahezu erreicht hat, ausgeschaltet oder ignoriert werden, sodass etwaige Kollisionen mit dem Endeffektor keine Sicherheitsmaßnahme, wie beispielsweise einen Not-Stopp, auslösen. Nachteilig ist bei derartigen Systemen, dass die Mittel, die zur Implementierung der Kollisionsdetektion notwendig sind, nämlich insbesondere Federelemente, weiterhin für eine flexible Lagerung des Endeffektors sorgen, sodass derartige System nur dort eingesetzt werden können, wo der Endeffektor durch ein zu bearbeitendes Element gelagert ist, wenn er seine Arbeitsposition erreicht hat, beispielsweise durch eine festzuziehende Schraube oder Mutter.

Ein weiteres bekanntes System nutzt einen pneumatisches Element, dass zwischen dem Roboterarm und dem Endeffektor angeordnet ist, um eine Kollision des Endeffektors mittels einer Druckerhöhung in dem pneumatischen Element zu detektieren. Dieses System funktioniert zuverlässig und lässt sich auf einfache Art und Weise realisieren. Nachteilig ist hierbei jedoch, dass der Endeffektor im Wesentlichen nur auf Zug belastet werden kann, wenn nicht permanent ein Abschaltsignal generiert werden soll. Das pneumatische Element ist für sich genommen auch nicht in der Lage einen definierten Anpressdruck auf den Endeffektor zu übertragen, wie es beispielsweise bei einer Vielzahl von Kontaktschweißverfahren erforderlich ist.

Aus der EP 2 065 144 A1 ist eine als "Einrichtung zum Schutz von beweglichen, bevorzugt reaktionskraftfrei wirkenden Bearbeitungsköpfen" bezeichnete Vorrichtung bekannt, die im Falle einer Kollision des als Bearbeitungskopf bezeichneten Endeffektors mit einem Hindernis, eine Verlagerung des Endeffektors parallel zu einer Horizontalebene ermöglicht und so ein sicheres Abschalten eines den Endeffektor tragenden Roboters ermöglichen soll. Im bestimmungsgemäßen Betrieb ist der Endeffektors mittels mehrerer Schiebeanschläge und Festanschläge der Vorrichtung lösbar an dem Roboter festgelegt, indem zwischen den Schiebeanschlägen und den Festanschlägen Oberflächenkräfte wirken, beispielsweise magnetische Kräfte. Sobald der Endeffektors mit einem Objekt kollidiert und die Oberflächenkräfte überschritten werden, wird die Verbindung zwischen den Schiebeanschlägen und den Festanschlägen gelöst und der Endeffektor kann entgegen seiner vorherigen Verlagerungsrichtung ausweichen.

Nachteilig bei dieser Vorrichtung ist, dass sie weder dazu vorgesehen, noch geeignet ist, den Endeffektor tatsächlich starr an der Führungsmaschine festzulegen. Im Falle einer Verwendung im Rahmen von MRK müssten die Haltekräfte und oder die Fahrgeschwindigkeit des Bearbeitungskopfes so gering gewählt werden, dass die vorgeschriebenen Belastungsgrenzen beim Zusammenstoß mit einer Bedienperson nicht überschritten werden. Damit ist Vorrichtung nach der Lehre der EP 2 065 144 A1 weder dazu vorgesehen noch geeignet, sinnvoll mit solchen Bearbeitungsköpfen bzw. Endeffektoren verwendet zu werden, die eine Kraftübertragung auf das Werkstück erfordern, insbesondere also nicht mit Fräsköpfen, Bohrern und Ultraschallsonotroden.

Als Aufgabe der vorliegenden Erfindung wird es daher angesehen, eine Vorrichtung zur Verfügung zu stellen, mittels der Kollisionen zwischen einem Endeffektor und einem Objekt detektierbar sind, wobei mittels der Vorrichtung definierte Kräfte von dem Roboter auf den Endeffektor übertragbar sind.

Diese Aufgabe wird erfindungsgemäß dadurch gelöst, dass die Sicherheitseinrichtung eine Arretieranordnung aufweist, wobei mittels der Arretieranordnung eine starre Verbindung zwischen dem Endeffektorabschnitt und dem Roboterabschnitt ausbildbar ist, sodass zwischen dem Roboter und dem Endeffektor eine starre Verbindung ausbildbar ist. Durch eine derartige Ausgestaltung der erfindungsgemäßen Sicherheitseinrichtung wird es ermöglicht, dass ein an dem Endeffektorabschnitt festgelegter Endeffektor durch den Roboter mit einer Kraft beaufschlagt werden kann. Dabei ist insbesondere eine Verkippen oder Auswandern des Endeffektors in einem Auftreffpunkt auf einem zu bearbeitenden Objekt verringert, bevorzugt verhindert.

Eine besonders vorteilhafte Umsetzung des Erfindungsgedankens sieht vor, dass der Endeffektor eine Sonotrode aufweist. Sonotroden werden im Rahmen von Ultraschallschweißverfahren verwendet um Material durch das Einbringen von Ultraschallenergie lokal aufzuschmelzen. Die äußere Form der Sonotrode richtet sich nach akustischen Erfordernissen und kann daher besonders schwer mit dem Ziel der Verringerung eines Verletzungsrisikos optimiert werden. Auch das Verkleiden der Sonotrode mit Sensorelementen, wie es aus dem Stand der Technik bekannt ist, ist nicht praktikabel, da die Sensorelement die Schwingungseigenschaften des Sonotrode negativ beeinflussen würden. Darüber hinaus wären derart angebrachte Sensorelemente aufgrund des Wirkprinzips der Sonotrode einem erhöhten Verschleiß durch Ultraschallschwingungen ausgesetzt. Aus den gleichen Gründen scheidet, unabhängig von einer schlechten Krafteinleitung, die Lagerung der Sonotrode an einem flexiblen Sensorelement, insbesondere einem pneumatischen Sensorelement, wie es aus dem Stand der Technik bekannt ist, aus.

Kinematik im Sinne des Erfindungsgedankens meint eine Vorrichtung, die eine Relativbewegung zwischen zwei mittels der Kinematik aneinander gelagerten Bauelementen entlang eines Verlagerungsweges und/ oder innerhalb einer Verlagerungsebene ermöglicht. Besonders bevorzugt weist zumindest eine der Kinematiken zumindest eine Zwangsführung auf, durch die eine Verlagerung zumindest eines der Bauelemente aus dem Verlagerungsweg und/ oder der Verlagerungsebene hinaus verhindert ist. Die Zwangsführung kann beispielsweise Schienen, Gleit- und/ oder Rollelemente, Anschlagsstücke, Nuten, Gestänge, insbesondere Parallelogrammgestänge, Zahnräder, Zahnstangen aber auch Federn, Dämpfer oder Ähnliches aufweisen.

Bei einer besonders bevorzugten Ausführungsform der erfindungsgemäßen Sicherheitseinrichtung ist vorgesehen, dass das zumindest eine Sensorelement Sensordaten auf der Grundlage magnetischer Effekte erzeugt. Vorteilhafterweise ist es vorgesehen, dass das Sensorelement ein Magnetband aufweisen kann, wobei mittels des Magnetbands eine Veränderung eines Abstands zwischen einem ersten Abschnitt der Sicherheitseinrichtung und einem zweiten Abschnitt der Sicherheitseinrichtung bestimmbar ist. Darüber hinaus kann das zumindest eine Sensorelement auch optische, elektronische, magnetische und/ oder mechanische Messmittel aufweisen, beispielsweise Laserentfernungsmesser, Hallsonden, Ultraschallmessgeräte oder Ähnliches.

Es ist vorteilhafterweise vorgesehen, dass die erfindungsgemäße Sicherheitseinrichtung mehr als ein Sensorelement aufweisen kann. Bevorzugt weist die Sicherheitseinrichtung drei Sensorelemente auf, die vorteilhafterweise jeweils einer Raumrichtung zugeordnet sein können, beispielsweise einer X-, Y- und Z-Richtung eines kartesischen Koordinatensystems.

Vorteilhafterweise ist es im Rahmen der vorliegenden Erfindung auch vorgesehen, dass eine mittelbar oder unmittelbar mittels der erfindungsgemäße Sicherheitseinrichtung ausgebildete starre Verbindung zwischen dem Roboter und dem Endeffektor durch die Sicherheitseinrichtung auch wieder lösbar ist.

Bei einer Vielzahl von Anwendungen in deren Rahmen Roboter und robotische Systeme verwendet werden, bilden kartesische Koordinatensystem eine wichtige Grundlage zur Orientierung im Raum und zur Planung von Prozessabläufen. Durch die beschriebene Ausgestaltung der erfindungsgemäßen Sicherheitseinrichtung, bei der, wie aus dem Stand der Technik bekannt, durch die Verlagerungsachsen eine Horizontalebene der Sicherheitseinrichtung aufgespannt ist, wobei der Endeffektorabschnitt parallel zu der Horizontalebene verlagerbar ist, ist die Integration der Sicherheitseinrichtung in bestehende Systeme erleichtert.

Darüber hinaus ist es mit einer Sicherheitseinrichtung, bei der durch Verlagerungsachsen eine Horizontalebene gebildet ist, relativ einfach möglich, Kollisionen zu detektieren. Sobald durch eine Kollision eine Kraft auf den Endeffektor und/ oder die Sicherheitseinrichtung ausgeübt wird, die ausreichend groß ist und die einen parallel zu der Horizontalebene ausgerichteten Anteil aufweist, wird der Endeffektorabschnitt innerhalb der Horizontalebene verlagert.

Eine vorteilhafte Umsetzung des Erfindungsgedankens sieht vor, dass die Arretieranordnung zumindest eine Sperrvorrichtung aufweist, wobei durch die Sperrvorrichtung die zumindest eine Kinematiken derart verriegelbar ist, dass die Verbindungsanordnung der zumindest einen Kinematik an zumindest einer entlang des jeweiligen Verlagerungsweges angeordneten Arretierposition fixierbar ist, sodass der Endeffektorabschnitt mittels der Verbindungsanordnung und der Arretieranordnung an dem Roboterabschnitt festlegbar und zwischen dem Roboter und dem Endeffektor die starre Verbindung ausbildbar ist. Verriegeln im Sinne des Erfindungsgedankens meint, dass die Kinematik in zumindest einer möglichen Bewegungsrichtung, die entlang eines Verlagerungsweges und/ oder parallel zu einer Verlagerungsebene gerichtet ist, gesperrt ist.

Es ist vorteilhafterweise vorgesehen, dass die Sperrvorrichtung sowohl unmittelbar, beispielsweise mittels mechanischer Elemente, als auch mittelbar, beispielsweise durch elektromagnetische Effekte, auf die Kinematik einwirken kann. Mechanische Elemente der Sperrvorrichtung können beispielsweise sein: Haken, Bolzen, Zahnstangen, Zahnräder, Klemmbacken, oder Ähnliches. Die elektromagnetischen Effekte können insbesondere durch Spulen und/ oder Elektromagneten erzeugt werden. Darüber hinaus ist es auch möglich, dass verschiedenartige Sperrvorrichtungen miteinander kombiniert werden können, beispielsweise eine Klemmbacke mit einem Permanentmagneten.

Eine derart ausgestaltete Sicherheitseinrichtung ist besonders geeignet, wenn durch das Arretieren einer der Kinematiken möglichst geringe Störimpulse erzeugt werden sollen.

Eine vorteilhafte Ausgestaltung der Erfindung sieht vor, dass die Arretieranordnung zumindest eine Klemmvorrichtung aufweist, wobei mittels der Klemmvorrichtung derart auf die zumindest eine Kinematik einwirkbar ist, dass der Endeffektorabschnitt der zumindest einen Kinematik mittels der Klemmvorrichtung an einen Endpunkt des zumindest einen Verlagerungsweges verlagerbar und dort klemmend festlegbar ist, sodass der Endeffektorabschnitt mittels des Verbindungsanordnung und der Arretieranordnung an dem Roboterabschnitt festlegbar und zwischen dem Roboter und dem Endeffektor die starre Verbindung ausbildbar ist. Eine derartig ausgestaltete, erfindungsgemäße Sicherheitseinrichtung ist besonders einfach herstellbar.

Eine besonders vorteilhafte Umsetzung des Erfindungsgedankens sieht vor, dass die Klemmvorrichtung einen Klemmaktuator und eine Klemmfläche aufweist, wobei eine Wirkrichtung des Klemmaktuators in Richtung der Klemmfläche gerichtet ist, wobei der Endeffektorabschnitt einen Anlageabschnitt mit zumindest einer Anlagefläche aufweist, wobei der Anlageabschnitt beabstandet von der Klemmfläche und dem Klemmaktuator zwischen der Klemmfläche und dem Klemmaktuator angeordnet ist, wobei der Endeffektorabschnitt durch den Klemmaktuator mittels Einwirken auf den Anlageabschnitt so in Richtung der Klemmfläche verlagerbar ist, dass die Anlagefläche des Anlageabschnitts mit der Klemmfläche in Anlage bringbar ist, sodass der Endeffektorabschnitt mittels des Anlageabschnitts und des Klemmaktuators klemmend an der Klemmfläche der Klemmvorrichtung festlegbar ist.

Bei einer vorteilhaften Ausgestaltung der erfindungsgemäßen Sicherheitseinrichtung ist vorgesehen, dass die Sicherheitseinrichtung zumindest ein Verzögerungselement aufweist, wobei das Verzögerungselement derart mit der zumindest einen Kinematik in Wirkverbindung gebracht/ bringbar ist, dass durch das Verzögerungselement auf den Endeffektorabschnitt eine Verzögerungskraft ausübbar ist, sobald der Endeffektorabschnitt in einen Verzögerungsabschnitt des Verlagerungswegs verlagert ist. Durch eine derartige Ausgestaltung der erfindungsgemäßen Sicherheitseinrichtung wird es ermöglicht, dass Bewegungen des Endeffektorabschnitts durch die Sicherheitseinrichtung aktiv und/ oder passiv beeinflusst werden können.

Es ist vorteilhafterweise vorgesehen, dass zumindest eines der Verzögerungselemente eine Druckfeder aufweisen oder sein kann. Dabei ist es vorgesehen, dass der Verzögerungsabschnitt des Verlagerungsweges einem Federweg der Druckfeder entspricht, sodass eine Federkraft auf den Endeffektorabschnitt wirkt, sobald er in den Verzögerungsabschnitt hineinverlagert wird und so die Druckfeder entlang des Federweges gestaucht wird. Darüber hinaus ist es vorteilhafterweise auch vorgesehen, dass das Verzögerungselement als eine Zugfeder ausgebildet sein kann, wobei der Endeffektorabschnitt mit der Zugfeder derart in Wirkverbindung gebracht ist, dass die Zugfeder gestreckt wird sobald der Endeffektorabschnitt in Verzögerungsabschnitt hineinverlagert wird und so eine Federkraft auf den Endeffektorabschnitt wirkt. Die Federkraft wirkt so lange auf den Endeffektorabschnitt, wie er in den Verzögerungsabschnitt hineinverlagert ist. Sobald die Federkraft dominant ist, wird der Endeffektorabschnitt in Richtung der Federkraft beschleunigt.

Das zumindest eine Verzögerungselement kann vorteilhafterweise auch hydraulische, pneumatische, magnetische, elektromagnetische oder ähnliche Elemente aufweisen, die geeignet sind auf den Endeffektorabschnitt eine Kraft auszuüben. Derartige Elemente sind insbesondere Hydraulikzylinder, Pneumatikzylinder, Permanentmagneten, Elektromagneten, Wirbelstrombremsen, mechanische Bremsen oder Ähnliches.

Um insbesondere eine ungewollte Verlagerung des Endeffektorabschnitts zu minimieren, ist es vorteilhafterweise vorgesehen, dass mehrere Verzögerungselemente so mit dem Endeffektorabschnitt in Wirkverbindung gebracht werden, dass der Endeffektorabschnitt durch die Verzögerungselemente in einer Ruheposition gehalten wird. So ist es vorteilhafterweise vorgesehen, dass ein durch eine der Kinematiken entlang eines linearen Verlagerungsweges geführter Endeffektorabschnitt durch zwei als Federn ausgebildete Verzögerungselemente in einer entlang des Verlagerungsweges ausgebildeten Ruheposition gehalten sein kann, wobei bei einer Verlagerung des Endeffektorabschnitts aus der Ruheposition heraus, durch jede der Federn eine Federkraft auf den Endeffektorabschnitt ausgeübt wird, die einer Verlagerungsrichtung des Endeffektorabschnitts entgegen gerichtet ist.

Dabei ist es vorteilhafterweise auch vorgesehen, dass zumindest eines der Verzögerungselemente gleichzeitig nach mehreren Wirkprinzipien arbeitet, also beispielsweise als eine Feder und als ein Dämpfer. Besonders bevorzugt weist zumindest eines der Verzögerungselemente eine Kombination aus einer Feder und einem Dämpfer auf. Durch eine derartige Kombination ist es auf einfache Art und Weise möglich, ungewollte mechanische Schwingungen zu tilgen. Insbesondere, wenn der Endeffektor eine Sonotrode ist, ist durch eine derartige Ausgestaltung der erfindungsgemäßen Sicherheitseinrichtung auch der durch die Ultraschallenergie verursachte Verschleiß verringerbar.

Eine vorteilhafte Umsetzung des Erfindungsgedankens sieht vor, dass die Sicherheitseinrichtung zumindest einen Aktuator aufweist, wobei der Aktuator derart mit der zumindest einen Kinematik in Wirkverbindung gebracht/ bringbar ist, dass der Endeffektorabschnitt mittels des zumindest einen Aktuators zumindest abschnittsweise entlang des Verlagerungsweges verlagerbar ist, sodass mittels der Sicherheitseinrichtung eine Position des Endeffektors in Relation zu dem Roboter veränderbar ist. Durch eine derartige Ausgestaltung der erfindungsgemäßen Sicherheitseinrichtung wird es ermöglicht, dass der Endeffektor mittels der Sicherheitseinrichtung unabhängig von dem Roboter verlagerbar ist.

Es ist vorteilhafterweise vorgesehen, dass mittels des zumindest einen Aktuators eine Feineinstellung des Endeffektors durchgeführt werden kann. Dies ist insbesondere bei vorteilhaft, wenn zwar eine hohe Genauigkeit bei der Positionierung des Endeffektors erforderlich ist, diese jedoch mittels des Roboters alleine nur mit sehr hohem Aufwand erreichbar ist. Hierzu ist es vorteilhafterweise vorgesehen, dass die Aktuatoren der Sicherheitseinrichtung mit einer Robotersteuerung in Wirkverbindung gebracht sein können.

Um das Sicherheitsniveau von Robotern zu erhöhen, ist es darüber hinaus vorteilhafterweise vorgesehen, dass die Aktuatoren mit einer unabhängigen Energieversorgung in Wirkverbindung gebracht sein können, sodass der Endeffektor auch bei einem Ausfall einer Hauptstromversorgung des Roboters mittels der Aktuatoren verlagerbar ist. Damit könnte beispielsweise ein durch den Endeffektor geklemmtes Objekt unabhängig von dem Roboter befreit werden. Dies ist insbesondere auch im Sinne der Arbeitssicherheit vorteilhaft.

Bei einer vorteilhaften Ausgestaltung der erfindungsgemäßen Sicherheitseinrichtung ist vorgesehen, dass die Verbindungsanordnung der zumindest eine Kinematik der Sicherheitseinrichtung einen dritten Verbindungsabschnitt mit einem dritten Verlagerungsweg aufweist, wobei der dritte Verlagerungsweg einen geradlinigen Verlauf aufweist und sich entlang einer dritten Verlagerungsachse erstreckt, wobei die dritte Verlagerungsachse senkrecht zu der ersten Verlagerungsachse und der zweiten Verlagerungsachse ausgerichtet ist, sodass der Endeffektorabschnitt senkrecht zu der Horizontalebene in einer Vertikalrichtung der Sicherheitseinrichtung verlagerbar ist. Eine derartige Ausgestaltung der erfindungsgemäßen Sicherheitseinrichtung ist insbesondere vorteilhaft, um eine Detektionsempfindlichkeit der Sicherheitseinrichtung gegenüber Kollisionen zu erhöhen, die eine Kollisionsrichtung aufweisen, die nahezu senkrecht zu der Horizontalebene ausgerichtet ist.

Eine vorteilhafte Umsetzung des Erfindungsgedankens sieht vor, dass zumindest eines der Sensorelemente der Sicherheitseinrichtung mit einer Robotersteuerung des Roboters in Wirkverbindung bringbar ist, sodass durch die Robotersteuerung eine Verlagerung des Endeffektorabschnitts in Relation zu dem Roboterabschnitt detektierbar und so eine Kollision des Endeffektors mit einem Objekt, das einen von dem Roboterabschnitt abweichenden Bewegungsvektor aufweist, bestimmbar ist. Durch eine solche Integration insbesondere der Sensorelemente der erfindungsgemäßen Sicherheitseinrichtung in die Robotersteuerung wird erreicht, dass der Roboter auf der Grundlage der durch das Sensorelement der Sicherheitseinrichtung erzeugten Sensordaten steuerbar ist. So kann der Roboter beispielsweise einen Not-Stopp ausführen, wenn sich auf der Grundlager der durch das Sensorelement erzeugten Sensordaten ergibt, dass die Sicherheitseinrichtung und / oder der Endeffektor mit einem Objekt kollidiert sind. Not-Stopp wird vorliegend als Oberbegriff für die Unterbegriffe Not-Halt, also das vollständige Abstoppen der Maschine, und Not-Aus, also das reine Ausschalten der Maschine, angesehen.

Eine vorteilhafte Ausgestaltung der Erfindung sieht vor, dass die Sicherheitseinrichtung derart mit einer Robotersteuerung des Roboters in Wirkverbindung gebracht/ bringbar ist, dass durch die Robotersteuerung Elemente der Sicherheitseinrichtung steuerbar sind. Dabei ist vorteilhafterweise vorgesehen, dass durch die Robotersteuerung insbesondere die Verzögerungselemente und die Aktuatoren zumindest einer der Kinematiken steuer- und/ oder einstellbar sind.

Steuerbar im Sinne des Erfindungsgedankens meint vorteilhafterweise insbesondere auch, dass die Robotersteuerung Zugriff auf zumindest eines der Sensorelemente haben und dieses beeinflussen kann, beispielsweise indem die Robotersteuerung einen Messbereich des Sensorelements ändert.

Die Erfindung betrifft auch eine Endeffektoranordnung für einen Roboter, wobei die Endeffektoranordnung zumindest eine der zuvor beschriebenen Sicherheitseinrichtung sowie einen Endeffektor aufweist, wobei der Endeffektor an dem Endeffektorabschnitt der Sicherheitseinrichtung festgelegt ist und wobei die Endeffektoranordnung mittels des Roboterabschnitts der Sicherheitseinrichtung an dem Roboter festlegbar ist. Es ist vorteilhafterweise vorgesehen, dass der Roboterabschnitt der Endeffektoranordnung an zumindest eine standardisierte Endeffektoraufnahme des Roboters angepasst sein kann. Darüber hinaus ist es vorteilhafterweise ebenfalls vorgesehen, dass die Endeffektoranordnung eine Universalkupplung aufweisen kann, mittels derer sie an einer Vielzahl unterschiedlicher Endeffektoraufnahmen festlegbar sein kann.

Darüber hinaus betrifft die Erfindung auch ein Sicherheitssystem für einen Roboter, wobei das Sicherheitssystem zumindest eine der zuvor beschriebenen Sicherheitseinrichtung und/ oder zumindest eine der zuvor beschriebenen Endeffektoranordnungen aufweist, wobei das Sicherheitssystem eine Sicherheitssteuerung aufweist, wobei die Sicherheitssteuerung mit zumindest einem der Sensorelemente der Sicherheitseinrichtung und/ oder der Endeffektoranordnung in Wirkverbindung bringbar/ gebracht ist, wobei durch die Sicherheitseinrichtung mittels des zumindest einen Sensorelements eine Verlagerung des Endeffektorabschnitts in Relation zu dem Roboterabschnitt detektierbar und so eine Kollision des Endeffektors mit einem Objekt, das einen von dem Roboterabschnitt abweichenden Bewegungsvektor aufweist, bestimmbar ist, wobei die Sicherheitssteuerung so mit der Robotersteuerung in Wirkverbindung gebracht/ bringbar ist, dass eine Bewegung des Roboters durch die Sicherheitssteuerung beeinflussbar ist. Vorteilhafterweise ist es dabei erfindungsgemäß vorgesehen, dass die Sicherheitssteuerung auf verschiedene Arten ausgebildet sein kann, beispielsweise als separate Datenverarbeitungseirichtung oder als in die Robotersteuerung integriertes Softwaremodul.

Bei einer besonders vorteilhaften Ausführungsform des erfindungsgemäßen Sicherheitssystems ist es vorgesehen, dass die Sicherheitssteuerung zumindest einfach redundant ausgebildet ist. Dabei ist es beispielsweise auch möglich, dass eine Hauptinstanz der Sicherheitssteuerung in die Robotersteuerung integriert ist, wobei eine Back-Up-Instanz der Sicherheitssteuerung als separate Datenverarbeitungseinrichtung ausgebildet ist.

Eine vorteilhafte Ausgestaltung der Erfindung sieht vor, dass die Sicherheitssteuerung derart mit zumindest einer der Arretieranordnung in Wirkverbindung gebracht/ bringbar ist, dass durch die Sicherheitssteuerung mittels der Arretieranordnung zumindest eine der starren Verbindungen zwischen dem Endeffektorabschnitt und dem Roboterabschnitt ausbildbar ist. Durch eine derartige Ausgestaltung der Erfindung ist es ermöglicht, dass die Sicherheitssteuerung festlegt, wann mittels zumindest einer der Arretieranordnung zumindest eine der starren Verbindungen ausgebildet wird.

Dabei ist es vorteilhafterweise auch vorgesehen, dass die Sicherheitssteuerung und die Robotersteuerung so aneinander angepasst sein können, dass Steuerbefehle der Robotersteuerung durch Steuerbefehle der Sicherheitssteuerung übersteuerbar sind. So kann es beispielsweise vorgesehen sein, dass eine starre Verbindung, die gemäß eines Steuerbefehls der Robotersteuerung ausgebildet werden soll, aufgrund eines Steuerbefehls der Sicherheitssteuerung nicht ausgebildet wird, weil der Sicherheitssteuerung Daten vorliegen, die insbesondere nahelegen, dass der Endeffektor mit einem Objekt kollidiert ist, sodass ein Ausbilden der starren Verbindung ein erhöhtes Gefahrenpotential für das Objekt erzeugen würde, mit dem der Endeffektor wahrscheinlich kollidiert ist.

Bei einer vorteilhaften Ausgestaltung des erfindungsgemäßen Sicherheitssystems ist vorgesehen, dass auf der Sicherheitssteuerung des Sicherheitssystems zumindest eine Sicherheitsregel hinterlegt/ hinterlegbar ist, wobei durch die Sicherheitsregel bestimmt ist, bei welchen Werten welcher Betriebsparameter des Roboters zumindest eine der Arretieranordnungen in einen Verriegelungszustand überführt ist, in dem die zumindest eine Arretieranordnung arretiert ist und/ oder und bei welchen Werten welcher Betriebsparameter zumindest eine der Arretieranordnungen in einen Entriegelungszustand überführt ist, in dem die zumindest eine Arretieranordnung entriegelt ist. Dabei ist es vorteilhafterweise vorgesehen, dass ein Betriebsparameter insbesondere eine räumliche Ausrichtung des Roboters, eine Bewegungsgeschwindigkeit einer mit dem Roboter in Wirkverbindung stehender Komponente, ein Zustand zumindest eines Endeffektors oder Ähnliches sein.

Eine vorteilhafte Umsetzung des Erfindungsgedankens sieht vor, dass durch die Sicherheitsregel zumindest ein Arbeitsvolumen und zumindest ein Sicherheitsvolumen definiert sind, wobei durch die Sicherheitsregel bestimmt ist, ob zumindest eine der Arretieranordnungen in den Verriegelungszustand überführt ist und/ oder ob zumindest eine der Arretieranordnungen in dem Entriegelungszustand überführt ist, wenn zumindest ein Referenzpunkt, der auf zumindest eine Raumkoordinate des zumindest einen Endeffektors bezogen ist, innerhalb des zumindest einen Arbeitsvolumens oder des zumindest einen Sicherheitsvolumens angeordnet ist. Vorteilhafterweise ist es darüber hinaus auch vorgesehen, dass durch die Sicherheitsregel eine Vielzahl von Arbeitsvolumina definiert sein kann. Bevorzugt sind die Arbeitsvolumina derart ausgebildet, dass der zumindest eine Endeffektor bei einem Eintritt des zumindest einen Referenzpunktes in eines der Arbeitsvolumina so in Relation zu einem Werkstück, das mittels des Endeffektors bearbeitet werden soll, angeordnet ist, dass ein von dem Endeffektor ausgehendes Gefährdungspotenzial minimal ist.

Nachfolgend werden einige Ausführungsbeispiele des Erfindungsgedankens näher erläutert, die in der Zeichnung dargestellt sind. Es zeigen:
Figur 1 eine schematisch dargestellte, teilweise geschnittene Seitenansicht einer Ausführungsform der erfindungsgemäßen Sicherheitseinrichtung,
Figuren 2 und 3 schematisch dargestellte, teilweise geschnittene Draufsichten des ersten und zweiten Verbindungsabschnitts der in Figur 1 dargestellten Sicherheitseinrichtung,
Figur 4 eine schematische Darstellung einer Ausführungsform einer Endeffektoranordnung und
Figur 5 eine schematische Darstellung einer Ausführungsform des Sicherheitssystems und

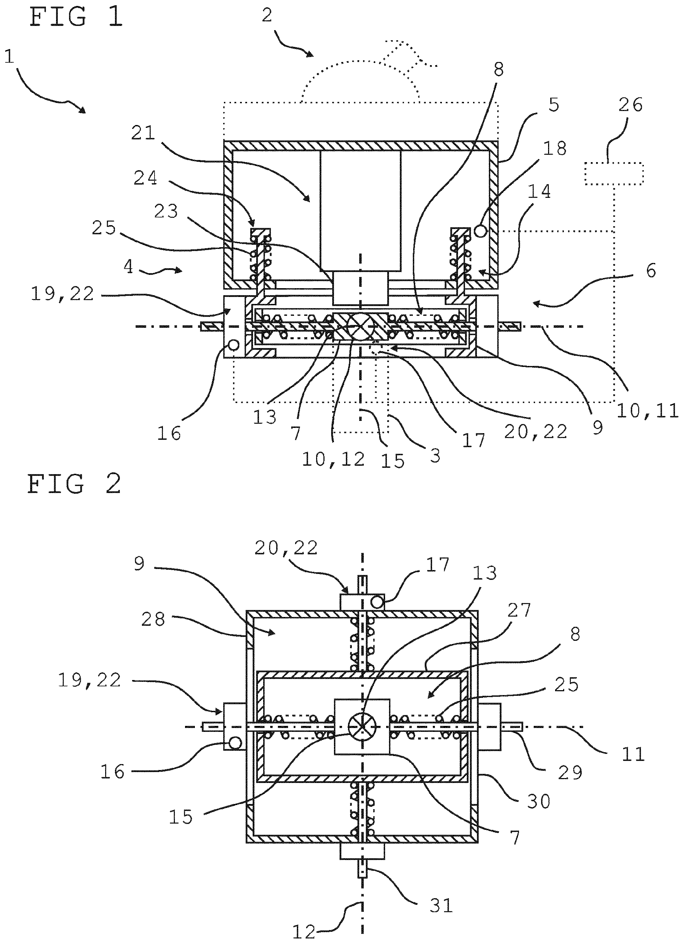

In Figur 1 ist eine schematisch dargestellte, teilweise geschnittene Seitenansicht einer Ausführungsform der erfindungsgemäßen Sicherheitseinrichtung 1 gezeigt. Die Sicherheitseinrichtung 1 ist an einem lediglich schematisch und lediglich teilweise dargestellten Roboter 2 festgelegt. Darüber hinaus ist an der Sicherheitseinrichtung 1 ein schematisch dargestellte Endeffektor 3 angeordnet.

Die Sicherheitseinrichtung 1 weist eine Kinematik 4 mit einem Roboterabschnitt 5, einer Verbindungsanordnung 6 und einem Endeffektorabschnitt 7 auf. Die Sicherheitseinrichtung 1 ist mittels des Roboterabschnitts 5 der Kinematik 4 lösbar an dem Roboter 2 festgelegt. An dem Endeffektorabschnitt 7 der Kinematik 4 ist der Endeffektor 3 lösbar festgelegt.

Die Verbindungsanordnung 6 der dargestellten Sicherheitseinrichtung 1 weist 3 weist einen ersten Verbindungsabschnitt 8 und einen zweiten Verbindungsabschnitt 9 auf. Dabei weist der erste Verbindungsabschnitt 8 einen ersten Verlagerungsweg auf der sich geradlinigen entlang einer ersten Verlagerungsachse 11 erstreckt. In den Figuren sind die Verlagerungswege weder dargestellt noch bezeichnet. Der zweiten Verbindungsabschnitt 9 weist einen zweiten Verlagerungsweg auf sich geradlinig entlang einer zweiten Verlagerungsachse 12 erstreckt. Die zweite Verlagerungsachse 12 ist in Figur 1 senkrecht zur Bildebene ausgerichtet. Die erste Verlagerungsachse 11 und die zweite Verlagerungsachse 12 sind senkrecht zueinander ausgerichtet und schneiden sich in einem Kreuzungspunkt 13. Durch die erste und zweite Verlagerungsachse 11,12 ist eine Horizontalebene 10 der Sicherheitseinrichtung 1 aufgespannt. Der Endeffektorabschnitt 7 der dargestellten Sicherheitseinrichtung 1 ist parallel zu der Horizontalebene 10 verlagerbar.

Die Verbindungsanordnung 6 der in Figur 1 gezeigten Sicherheitseinrichtung 1 weist darüber hinaus einen dritten Verbindungsabschnitt 14 mit einem dritten Verlagerungsweg auf. Der dritte Verlagerungsweg weist einen geradlinigen Verlauf auf und erstreckt sich entlang einer dritten Verlagerungsachse 15. Die dritte Verlagerungsachse 15 ist senkrecht zu der ersten Verlagerungsachse 11 und der zweiten Verlagerungsachse 12 ausgerichtet und schneidet diese in dem Kreuzungspunkt 13. Mittels des dritten Verbindungsabschnitts 14 ist der Endeffektorabschnitt 7 senkrecht zu der Horizontalebene 10 entlang der dritten Verlagerungsachse 15 und parallel zu einer weder dargestellten noch bezeichneten Vertikalrichtung der Sicherheitseinrichtung 1 verlagerbar ist.

Der Endeffektorabschnitt 7 ist mittels der Verbindungsabschnitte 8,9,14 der Kinematik 4 so an dem Roboterabschnitt 5 gelagert ist, dass der Endeffektorabschnitt 7 entlang der Verlagerungswege 8,9,14 in Relation zu dem Roboterabschnitt 5 verlagerbar ist.

Die Sicherheitseinrichtung 1 weist ein erstes, ein zweites und ein drittes Sensorelement 16,17,18 auf, durch die jeweils Relativbewegungen der Verbindungsabschnitte 8,9,14 in Relation zu dem jeweiligen Sensorelement 16,17,18 detektierbar sind. Das erste Sensorelement 16 detektiert Relativbewegungen zwischen dem Endeffektorabschnitt 7 und und dem zweiten Verbindungsabschnitt 9. Das zweite Sensorelement 17 detektiert Relativbewegungen zwischen dem dem ersten Verbindungsabschnitt 8 und dem zweiten Verbindungsabschnitt 9. Das dritte Sensorelement 18 detektiert Relativbewegungen zwischen dem Roboterabschnitt 5 und dem dritten Verbindungsabschnitt 14. Durch die Überwachung der Relativbewegungen der Verbindungsabschnitte 8,9,14 und des Roboterabschnitts 5 zueinander sind Kollision des an dem Endeffektorabschnitt 7 festgelegten Endeffektors 3 mit einem Objekt, das einen von dem Roboterabschnitt 5 abweichenden Bewegungsvektor aufweist, bestimmbar.

Die dargestellte Sicherheitseinrichtung 1 weist eine erste, eine zweite und eine dritte Arretieranordnung 19,20,21 auf. Mittels der ersten Arretieranordnung 19 ist eine starre Verbindung zwischen dem Endeffektorabschnitt 7 und dem zweiten Verbindungsabschnitt 9 ausbildbar, sodass eine Relativbewegung des Endeffektorabschnitt 7 in Relation zu dem ersten Verbindungsabschnitt 8 verhinderbar ist. Mittels der zweiten Arretieranordnung 19 ist eine starre Verbindung zwischen dem ersten Verbindungsabschnitt 8 und dem zweiten Verbindungsabschnitt 9 ausbildbar, sodass eine Relativbewegung des ersten Verbindungsabschnitts 9 in Relation zu dem zweiten Verbindungsabschnitt 14 verhinderbar ist. Mittels der dritten Arretieranordnung 20 ist eine starre Verbindung zwischen dem dritten Verbindungsabschnitt 14 und dem Roboterabschnitt 5 ausbildbar, sodass eine Relativbewegung des dritten Verbindungsabschnitts 14 in Relation zu dem Roboterabschnitt 5 verhinderbar ist. Somit ist mittels der Arretieranordnungen 19,20,21 eine starre Verbindung zwischen dem Endeffektorabschnitt 7 und dem Roboterabschnitt 5 ausbildbar, sodass zwischen dem Roboter 2 und dem Endeffektor 3 eine starre Verbindung ausbildbar ist.

Die erste und zweite Arretieranordnung 19,20 weisen jeweils zwei Sperrvorrichtungen 22 auf, von denen lediglich eine bezeichnet ist. Durch die Sperrvorrichtungen 22 sind der erste und der zweite Verbindungsabschnitt 8,9 der Kinematik 4 an einer beliebigen, entlang des jeweiligen Verlagerungsweges des jeweiligen Verbindungsabschnitts 8,9 angeordneten, Arretierposition fixierbar.

Die dritte Arretieranordnung 21 weist eine Klemmvorrichtung 23 auf, mittels der derart auf die Kinematik 4 einwirkbar ist, dass der Endeffektorabschnitt 7 der Kinematik 4 an einen nicht dargestellten Endpunkt des dritten Verlagerungsweges verlagerbar und dort klemmend festlegbar ist. Hierzu wirkt die Klemmvorrichtung 23 in Richtung des Endeffektorabschnitts 7 mit einer Klemmkraft auf den Endeffektorabschnitt 7 ein und verlagert diesen entlang der dritten Verlagerungsachse 15 zusammen mit den Verbindungsabschnitten 8,9,14 von dem Roboterabschnitt 5 weg. Der dritte Verlagerungsweg ist durch Haltemittel 24 des dritten Verbindungsabschnitts 14 begrenzt. Jeder der Verbindungsabschnitte 8,9,14 weist jeweils zwei als Federn ausgebildete Verzögerungselement 25 auf, von denen eine beispielhaft bezeichnet ist. Die Verzögerungselemente 25, die dem dritten und zweiten Verbindungsabschnitt 9,14 zugeordnet sind, wirken mittelbar auf den Endeffektorabschnitt 7. Die Verzögerungselemente 25 die dem ersten Verbindungsabschnitt 8 zugeordnet sind, wirken unmittelbar auf den Endeffektorabschnitt 7. Durch die Verzögerungselemente 25 des ersten und zweiten Verbindungsabschnitts 8,9 ist der Endeffektorabschnitt 7 in einer innerhalb der Horizontalebene 10 angeordneten Ruheposition (nicht bezeichnet) fixiert. Eine Position des Endeffektorabschnitts 7 in Relation zu dem Roboterabschnitt 5 entlang der Vertikalrichtung ergibt sich bei der dargestellten Ausführungsform der Sicherheitseinrichtung 1 aus der Federkonstante der Verzögerungselemente 25 des dritten Verbindungsabschnitts 14 sowie der Gewichtskraft, die durch den dritten Verbindungsabschnitt 14 und die an ihm angeordneten Elemente ausgeübt wird.

Die Sensorelemente 16,17,18 der dargestellten Sicherheitseinrichtung 1 sind mit einer Robotersteuerung 26 des Roboters 2 in Wirkverbindung gebracht, sodass durch die Robotersteuerung 26 eine Verlagerung des Endeffektorabschnitts 7 in Relation zu dem Roboterabschnitt 5 detektierbar und so eine Kollision des Endeffektors 3 mit einem Objekt, das einen von dem Roboterabschnitt 5 abweichenden Bewegungsvektor aufweist, bestimmbar ist.

In Figur 2 ist eine schematisch dargestellte, teilweise geschnittene Draufsicht des ersten und zweiten Verbindungsabschnitts 8,9 der in Figur 1 dargestellten Sicherheitseinrichtung 1 gezeigt. Der erste Verbindungsabschnitt 8 weist eine erste Rahmenkonstruktion 27 auf, die von einer zweiten Rahmenkonstruktion 28 des zweiten Verbindungsabschnitts 9 umgriffen ist. Der erste Verbindungsabschnitt 8 weist eine Welle 29 auf, die in ersten Lagerausnehmungen 30 des zweiten Verbindungsabschnitts 9 gelagert ist. Auf der Welle 29 sind auch der Endeffektorabschnitt 7 sowie zwei Verzögerungselemente 25 gelagert. Die Welle 29 ist zusammen mit dem Endeffektorabschnitt 7 entlang der ersten Verlagerungsachse 11 verlagerbar.

Der erste Verbindungsabschnitt 8 weist weiterhin zwei Wellenstümpfe 31 auf, mit der er in zweiten Lagerausnehmungen 32 des zweiten Verbindungsabschnitts 9 gelagert ist. Die ersten Lagerausnehmungen 29 sind als Langlöcher ausgebildet, wobei die zweiten Lagerausnehmungen 32 als runde Durchgangsbohrungen ausgebildet sind. Dadurch wird es ermöglicht, dass der erste Verbindungsabschnitt 8 zusammen mit den Wellenstümpfen 31 innerhalb des zweiten Verbindungsabschnitts 9 entlang der zweiten Verlagerungsachse 12 verlagerbar ist.

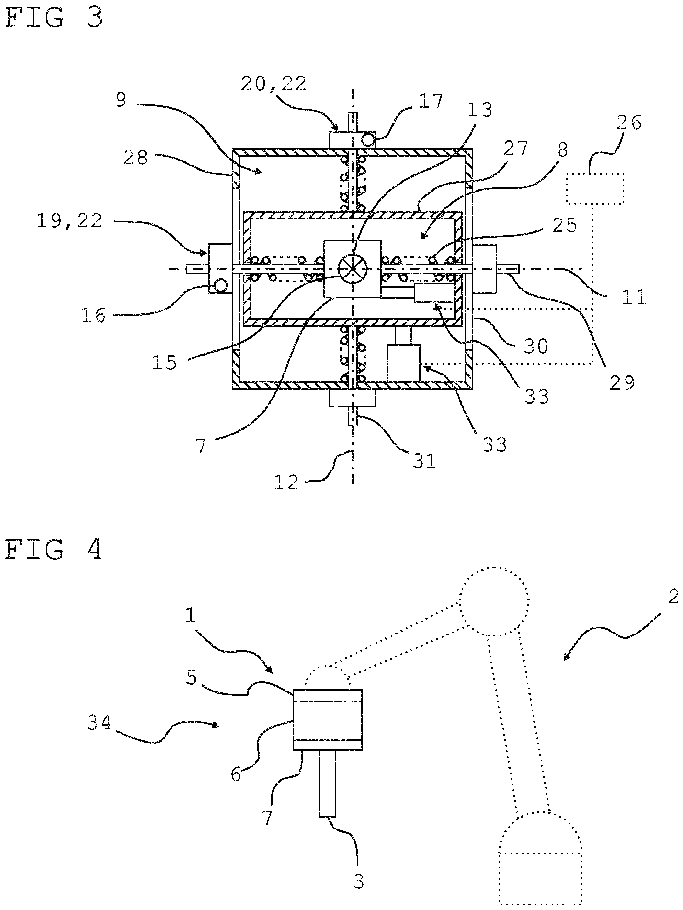

In Figur 3 sind weiter Ausführungsformen des ersten und zweiten Verbindungsabschnitts 8,9 gezeigt. Anders als die in Figur 2 gezeigten Ausführungsformen, weisen die in Figur 3 gezeigten Ausführungsformen Aktuatoren 33 auf. Mittels der Aktuatoren 33 ist der Endeffektorabschnitt 7 entlang des ersten und zweiten Verlagerungsweges verlagerbar. Hierdurch ist mittels der Sicherheitseinrichtung eine Position des Endeffektors in Relation zu dem Roboter veränderbar.

Die Aktuatoren 33 der Sicherheitseinrichtung 1 sind mit der Robotersteuerung 26 in Wirkverbindung gebracht, so dass durch die Robotersteuerung 26 Aktuatoren steuerbar sind.

In Figur 4 ist eine schematische Darstellung einer Endeffektoranordnung 34 für einen Roboter 2 gezeigt. Die, Endeffektoranordnung 34 weist eine Sicherheitseinrichtung 1 sowie einen Endeffektor 3 auf. Der Endeffektor 3 ist an dem Endeffektorabschnitt 7 der Sicherheitseinrichtung 1 festgelegt. Der Endeffektorabschnitt 7 ist mittels der Verbindungsanordnung 6 an dem Roboterabschnitt 5 festgelegt. Die Endeffektoranordnung 34 ist mittels des Roboterabschnitts 5 der Sicherheitseinrichtung 1 an dem Roboter 2 festgelegt.

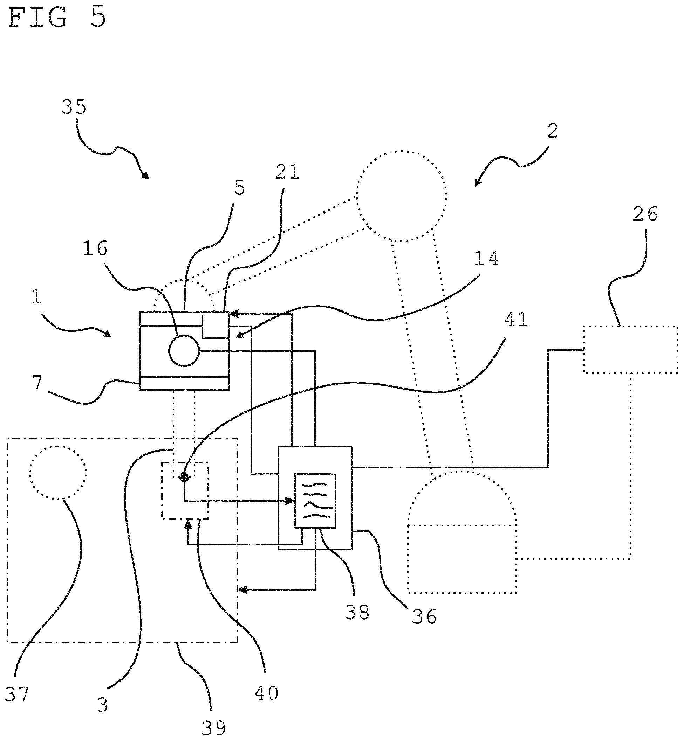

In Figur 5 ist eine schematische Darstellung eines Sicherheitssystems 35 für einen Roboter 2 gezeigt. Das Sicherheitssystem 35 weist eine Sicherheitseinrichtung 1 auf. In der Figur ist das erste Sensorelement 16 der Sicherheitseinrichtung 1 exemplarisch dargestellt. Das Sicherheitssystem 35 weist eine Sicherheitssteuerung 36 auf, die mit dem Sensorelement 16 der Sicherheitseinrichtung 1 in Wirkverbindung gebracht ist. Mittels des Sensorelements 16 ist durch die Sicherheitssteuerung 36 eine Verlagerung des Endeffektorabschnitts 7 der Sicherheitseinrichtung 1 in Relation zu dem Roboterabschnitt 5 der Sicherheitseinrichtung 1 detektierbar. Dadurch ist eine Kollision des Endeffektors 3 mit einem Objekt 37, das einen von dem Roboterabschnitt 5 abweichenden Bewegungsvektor aufweist, durch die Sicherheitssteuerung 36 bestimmbar. Die Sicherheitssteuerung 36 ist so mit der Robotersteuerung 26 in Wirkverbindung gebracht, dass eine Bewegung des Roboters 2 durch die Sicherheitssteuerung 36 beeinflussbar ist.

Die Sicherheitssteuerung 36 des in Figur 5 gezeigten Sicherheitssystems 35 ist mit der lediglich schematisch dargestellten dritten Arretieranordnung 21 der Sicherheitseinrichtung 1 in Wirkverbindung gebracht, so dass durch die Sicherheitssteuerung 36 mittels der dritten Arretieranordnung 21 eine starren Verbindung zwischen dem Roboterabschnitt 5 und dem dritten Verbindungsabschnitt 14 ausbildbar ist. Die dargestellten und beschriebenen Verbindungsmöglichkeiten zwischen der Sicherheitssteuerung 36, der Sicherheitseinrichtung 1 und der Robotersteuerung 26 sind lediglich beispielhaft zu verstehen.

Bei der dargestellten beispielhaften Ausführungsform eines erfindungsgemäßen Sicherheitssystems 35 ist die Sicherheitssteuerung 36 als separate Datenverarbeitungseinrichtung ausgeführt.

Auf der Sicherheitssteuerung 36 des dargestellten Sicherheitssystems 1 ist eine Sicherheitsregel 38 hinterlegt. Durch die Sicherheitsregel 38 ist bestimmt, bei welchen Werten welcher Betriebsparameter des Roboters 2 zumindest die dritte Arretieranordnung 21 in einen Verriegelungszustand überführt ist, in dem die dritte Arretieranordnung 21 arretiert ist und und bei welchen Werten welcher Betriebsparameter die dritte Arretieranordnung 21 in einen Entriegelungszustand überführt ist, in dem die dritte Arretieranordnung 21 entriegelt ist.

Hierzu sind durch die Sicherheitsregel 38 ein Sicherheitsvolumen 39 und ein Arbeitsvolumen 40 definiert. Durch die Sicherheitsregel 38 ist bestimmt, dass die dritte Arretieranordnungen 21 in den Verriegelungszustand überführt ist, wenn ein Referenzpunkt 41, der auf eine Raumkoordinate des Endeffektors 3 bezogen ist, innerhalb des Arbeitsvolumens 40 angeordnet ist. Darüber hinaus ist durch die Sicherheitsregel 38 bestimmt, dass die dritte Arretieranordnungen 21 in den Entriegelungszustand überführt ist, wenn der Referenzpunkt 41, innerhalb des Sicherheitsvolumens 39 angeordnet ist. In der Figur 5 ist das Objekt 37 innerhalb des Sicherheitsvolumens 39 angeordnet, wobei der Referenzpunkt 41 innerhalb des Arbeitsvolumens 40 angeordnet ist.

### BEZUGSZEICHENLISTE

- 1.: Sicherheitseinrichtung
- 2.: Roboter
- 3.: Endeffektor
- 4.: Kinematik
- 5.: Roboterabschnitt
- 6.: Verbindungsanordnung
- 7.: Endeffektorabschnitt
- 8.: erster Verbindungsabschnitt
- 9.: zweiter Verbindungsabschnitt
- 10.: Horizontalebene
- 11.: erste Verlagerungsachse
- 12.: zweite Verlagerungsachse
- 13.: Kreuzungspunkt
- 14.: dritter Verbindungsabschnitt
- 15.: dritte Verlagerungsachse
- 16.: erstes Sensorelement
- 17.: zweites Sensorelement
- 18.: drittes Sensorelement
- 19.: erste Arretieranordnung
- 20.: zweite Arretieranordnung
- 21.: dritte Arretieranordnung
- 22.: Sperrvorrichtung
- 23.: Klemmvorrichtung
- 24.: Haltemittel
- 25.: Verzögerungselement
- 26.: Robotersteuerung
- 27.: erste Rahmenkonstruktion
- 28.: zweite Rahmenkonstruktion
- 29.: Welle
- 30.: erste Lagerausnehmung
- 31.: Wellenstumpf
- 32.: zweite Lagerausnehmung
- 33.: Aktuator
- 34.: Endeffektoranordnung
- 35.: Sicherheitssystem
- 36.: Sicherheitssteuerung
- 37.: Objekt
- 38.: Sicherheitsregel
- 39.: Sicherheitsvolumen
- 40.: Arbeitsvolumen
- 41.: Referenzpunkt

## Patentansprüche

1. Sicherheitseinrichtung (1) zur Kollisionsüberwachung eines mit einem Roboter (2) in Wirkverbindung gebrachten/ bringbaren Endeffektors (3), wobei die Sicherheitseinrichtung (1) zumindest eine Kinematik (4) mit einem Roboterabschnitt, einer Verbindungsanordnung (6) und einem Endeffektorabschnitt (7) aufweist, wobei die Sicherheitseinrichtung (1) mittels des Roboterabschnitts (5) der Kinematik (4) an dem Roboter (2) festgelegt/ festlegbar ist, wobei an dem Endeffektorabschnitt (7) der zumindest einen Kinematik (4) der Endeffektor (3) festlegbar ist, wobei der Endeffektorabschnitt (7) mittels der Verbindungsanordnung (6) der zumindest einen Kinematik (4) so an dem Roboterabschnitt (5) gelagert ist, dass der Endeffektorabschnitt (7) in Relation zu dem Roboterabschnitt (5) zumindest entlang eines Verlagerungsweges verlagerbar ist, wobei die Verbindungsanordnung (6) der zumindest eine Kinematik (4) der Sicherheitseinrichtung (1) einen erste Verbindungsabschnitt (8) mit einem ersten Verlagerungsweg und einen zweiten Verbindungsabschnitt (9) mit einem zweiten Verlagerungsweg aufweist, wobei der erste Verlagerungsweg sich geradlinigen entlang einer ersten Verlagerungsachse (11) erstreckt, wobei der zweite Verlagerungsweg sich geradlinig entlang einer zweiten Verlagerungsachse (12) erstreckt und wobei die erste Verlagerungsachse (11) und die zweite Verlagerungsachse (12) senkrecht zueinander ausgerichtet sind und sich in einem Kreuzungspunkt (13) schneiden, sodass durch die Verlagerungsachsen (11, 12) eine Horizontalebene (10) der Sicherheitseinrichtung (1) aufgespannt ist, wobei der Endeffektorabschnitt (7) parallel zu der Horizontalebene (10) verlagerbar ist und wobei die Sicherheitseinrichtung (1) zumindest ein Sensorelement (16,17,18) aufweist mittels dessen eine Verlagerung des Endeffektorabschnitts (7) in Relation zu dem Roboterabschnitt (5) detektierbar ist, sodass eine Kollision des Endeffektors (3) mit einem Objekt (37), das einen von dem Roboterabschnitt (5) abweichenden Bewegungsvektor aufweist, bestimmbar ist, wobei die Sicherheitseinrichtung (1) eine Arretieranordnung (19, 20 21) aufweist, **dadurch gekennzeichnet, dass** mittels der Arretieranordnung (19, 20 ,21) eine starre Verbindung zwischen dem Endeffektorabschnitt (7) und dem Roboterabschnitt (5) ausbildbar ist, sodass zwischen dem Roboter (2) und dem Endeffektor (3) eine starre Verbindung ausbildbar ist.

2. Sicherheitseinrichtung (1) nach Anspruch 1, **dadurch gekennzeichnet, dass** die Arretieranordnung (19, 20 ,21) zumindest eine Sperrvorrichtung (22) aufweist, wobei durch die Sperrvorrichtung (22) die zumindest eine Kinematik (4) derart verriegelbar ist, dass die Verbindungsanordnung (6) der zumindest einen Kinematik (4) an zumindest einer entlang des jeweiligen Verlagerungsweges angeordneten Arretierposition fixierbar ist, sodass der Endeffektorabschnitt (7) mittels der Verbindungsanordnung (6) und der Arretieranordnung (19, 20 ,21) an dem Roboterabschnitt (5) festlegbar und zwischen dem Roboter (2) und dem Endeffektor (3) die starre Verbindung ausbildbar ist.

3. Sicherheitseinrichtung (1) nach einem der Ansprüche 1 bis 2, **dadurch gekennzeichnet, dass** die Arretieranordnung (19, 20 ,21) zumindest eine Klemmvorrichtung (23) aufweist, wobei mittels der Klemmvorrichtung (23) derart auf die zumindest ein Kinematik (4) einwirkbar ist, dass der Endeffektorabschnitt (7) der zumindest einen Kinematik (4) mittels der Klemmvorrichtung (23) an einen Endpunkt des zumindest einen Verlagerungsweges verlagerbar und dort klemmend festlegbar ist, sodass der Endeffektorabschnitt (7) mittels des Verbindungsanordnung (6) und der Arretieranordnung (19, 20 ,21) an dem Roboterabschnitt (5) festlegbar und zwischen dem Roboter (2) und dem Endeffektor (3) die starre Verbindung ausbildbar ist.

4. Sicherheitseinrichtung (1) nach einem der Ansprüche 1 bis 3, **dadurch gekennzeichnet, dass** die Sicherheitseinrichtung (1) zumindest ein Verzögerungselement (25) aufweist, wobei das Verzögerungselement (25) derart mit der zumindest einen Kinematik (4) in Wirkverbindung gebracht/ bringbar ist, dass durch das Verzögerungselement (25) auf den Endeffektorabschnitt (7) eine Verzögerungskraft ausübbar ist, sobald der Endeffektorabschnitt (7) in einen Verzögerungsabschnitt des zumindest einen Verlagerungswegs verlagert ist.

5. Sicherheitseinrichtung (1) nach einem der Ansprüche 1 bis 4, **dadurch gekennzeichnet, dass** die Sicherheitseinrichtung (1) zumindest einen Aktuator (33) aufweist, wobei der Aktuator (33) derart mit der zumindest einen Kinematik (4) in Wirkverbindung gebracht/ bringbar ist, dass der Endeffektorabschnitt (7) mittels des Aktuators (33) zumindest abschnittsweise entlang des zumindest einen Verlagerungsweges verlagerbar ist, sodass mittels der Sicherheitseinrichtung (1) eine Position des Endeffektors (3) in Relation zu dem Roboter (2) veränderbar ist.

6. Sicherheitseinrichtung (1) nach einem der Ansprüche 1 bis 5, **dadurch gekennzeichnet, dass** die Verbindungsanordnung (6) der zumindest eine Kinematik (4) der Sicherheitseinrichtung (1) einen dritten Verbindungsabschnitt (14) mit einem dritten Verlagerungsweg aufweist, wobei der dritte Verlagerungsweg einen geradlinigen Verlauf aufweist und sich entlang einer dritten Verlagerungsachse (15) erstreckt, wobei die dritte Verlagerungsachse (15) senkrecht zu der ersten Verlagerungsachse (11) und der zweiten Verlagerungsachse (12) ausgerichtet ist, sodass der Endeffektorabschnitt (7) senkrecht zu der Horizontalebene (10) in einer Vertikalrichtung der Sicherheitseinrichtung (1) verlagerbar ist.

7. Sicherheitseinrichtung (1) nach einem der Ansprüche 1 bis 6, **dadurch gekennzeichnet, dass** zumindest eines der Sensorelemente (16,17,18) der Sicherheitseinrichtung (1) mit einer Robotersteuerung (26) des Roboters (2) in Wirkverbindung bringbar ist, sodass durch die Robotersteuerung (26) eine Verlagerung des Endeffektorabschnitts (7) in Relation zu dem Roboterabschnitt (5) detektierbar und so eine Kollision des Endeffektors (3) mit einem Objekt (37), das einen von dem Roboterabschnitt (5) abweichenden Bewegungsvektor aufweist, bestimmbar ist.

8. Sicherheitseinrichtung (1) nach einem der Ansprüche 1 bis 7, **dadurch gekennzeichnet, dass** die Sicherheitseinrichtung (1) derart mit einer Robotersteuerung (26) des Roboters (2) in Wirkverbindung gebracht/ bringbar ist, dass durch die Robotersteuerung (26) Elemente der Sicherheitseinrichtung (1) steuerbar sind.

9. Endeffektoranordnung (34) für einen Roboter, wobei die Endeffektoranordnung (34) zumindest eine Sicherheitseinrichtung (1) nach einem der Ansprüche 1 bis 9 sowie einen Endeffektor (3) aufweist, wobei der Endeffektor (3) an dem Endeffektorabschnitt (7) der Sicherheitseinrichtung (1) festgelegt ist und wobei die Endeffektoranordnung (34) mittels des Roboterabschnitts (5) der Sicherheitseinrichtung (1) an dem Roboter (2) festlegbar ist.

10. Sicherheitssystem (35) für einen Roboter, wobei das Sicherheitssystem (35) zumindest eine Sicherheitseinrichtung (1) nach einem der Ansprüche 1 bis 8 und/ oder zumindest eine Endeffektoranordnung (34) nach Anspruch 9 aufweist, wobei das Sicherheitssystem (35) eine Sicherheitssteuerung (36) aufweist, wobei die Sicherheitssteuerung (36) mit dem zumindest einen Sensorelement (16,17,18) der Sicherheitseinrichtung (1) und/ oder der Endeffektoranordnung (34) in Wirkverbindung bringbar/ gebracht ist, wobei durch die Sicherheitseinrichtung (1) mittels des zumindest einen Sensorelements (16, 17, 18) eine Verlagerung des Endeffektorabschnitts (7) in Relation zu dem Roboterabschnitt (5) detektierbar und so eine Kollision des Endeffektors (3) mit einem Objekt (37), das einen von dem Roboterabschnitt (5) abweichenden Bewegungsvektor aufweist, bestimmbar ist, wobei die Sicherheitssteuerung (36) so mit der Robotersteuerung (26) in Wirkverbindung gebracht/ bringbar ist, dass eine Bewegung des Roboters (2) durch die Sicherheitssteuerung (36) beeinflussbar ist

11. Sicherheitssystem (35) nach Anspruch 10, **dadurch gekennzeichnet, dass** die Sicherheitssteuerung (36) derart mit zumindest einer der Arretieranordnungen (19, 20 ,21) in Wirkverbindung gebracht/ bringbar ist, dass durch die Sicherheitssteuerung (36) mittels zumindest einer der Arretieranordnungen (19, 20 ,21) zumindest eine der starren Verbindungen zwischen dem Endeffektorabschnitt (7) und dem Roboterabschnitt (5) ausbildbar ist.

12. Sicherheitssystem (35) nach Anspruch 11, **dadurch gekennzeichnet, dass** auf der Sicherheitssteuerung (36) des Sicherheitssystems (35) zumindest eine Sicherheitsregel (38) hinterlegt/ hinterlegbar ist, wobei durch die Sicherheitsregel (38) bestimmt ist, bei welchen Werten welcher Betriebsparameter des Roboters (2) zumindest eine der Arretieranordnungen (19, 20 ,21) in einen Verriegelungszustand überführt ist, in dem die zumindest eine Arretieranordnung (19, 20 ,21) arretiert ist und/ oder und bei welchen Werten welcher Betriebsparameter zumindest eine der Arretieranordnungen (19, 20 ,21) in einen Entriegelungszustand überführt ist, in dem die zumindest eine Arretieranordnung (19, 20 ,21) entriegelt ist.

13. Sicherheitssystem (35) nach Anspruch 12, **dadurch gekennzeichnet, dass** durch die Sicherheitsregel (38) zumindest ein Sicherheitsvolumen (39) und zumindest ein Arbeitsvolumen (40) definiert sind, wobei durch die Sicherheitsregel (38) bestimmt ist, ob zumindest eine der Arretieranordnungen (19, 20 ,21) in den Verriegelungszustand überführt ist und/ oder ob zumindest eine der Arretieranordnungen (19, 20 ,21) in dem Entriegelungszustand überführt ist, wenn zumindest ein Referenzpunkt (41), der auf zumindest eine Raumkoordinate des zumindest einen Endeffektors (3) bezogen ist, innerhalb des zumindest einen Sicherheitsvolumens (39) oder des zumindest einen Arbeitsvolumens (40) angeordnet ist.

## Claims

1. Safety device (1) for collision monitoring with respect to an end effector (3) which is/can be operatively connected to a robot (2), wherein the safety device (1) has at least one kinematic mechanism (4) comprising a robot portion, a connecting arrangement (6) and an end effector portion (7), wherein the safety device (1) is/can be fixed on the robot (2) by means of the robot portion (5) of the kinematic mechanism (4), wherein the end effector (3) can be fixed on the end effector portion (7) of the at least one kinematic mechanism (4), wherein the end effector portion (7) is mounted on the robot portion (5) by the connecting arrangement (6) of the at least one kinematic mechanism (4) in such a way that the end effector portion (7) can be displaced relative to the robot portion (5) at least along a displacement path, wherein the connecting arrangement (6) of the at least one kinematic mechanism (4) of the safety device (1) has a first connecting portion (8) with a first displacement path and a second connecting portion (9) with a second displacement path, wherein the first displacement path extends linearly along a first displacement axis (11), wherein the second displacement path extends linearly along a second displacement axis (12) and wherein the first displacement axis (11) and the second displacement axis (12) are oriented perpendicularly to each other and intersect at an intersection point (13) such that a horizontal plane (10) of the safety device (1) is spanned by the displacement axes (11, 12), wherein the end effector portion (7) can be displaced in parallel to the horizontal plane (10) and wherein the safety device (1) has at least one sensor element (16, 17, 18) with which a displacement of the end effector portion (7) relative to the robot portion (5) can be detected, such that a collision between the end effector (3) and an object (37) having a motion vector deviating from the robot portion (5) can be determined, wherein the safety device (1) has a detent arrangement (19, 20, 21), **characterized in that** a rigid connection between the end effector portion (7) and the robot portion (5) can be formed by means of the detent arrangement (19, 20, 21), such that a rigid connection can be formed between the robot (2) and the end effector (3).

2. Safety device (1) according to claim 1, **characterized in that** the detent arrangement (19, 20, 21) has at least one blocking device (22), wherein the blocking device (22) can lock the at least one kinematic mechanism (4) in such a way that the connecting arrangement (6) of the at least one kinematic mechanism (4) can be secured in at least one detent position located along the respective displacement path, so that the end effector portion (7) can be fixed on the robot portion (5) by means of the connecting arrangement (6) and the detent arrangement (19, 20, 21) and the rigid connection can be formed between the robot (2) and the end effector (3).

3. Safety device (1) according to one of claims 1 to 2, **characterized in that** the detent arrangement (19, 20, 21) has at least one clamping device (23), wherein the clamping device (23) can act upon the at least one kinematic mechanism (4) in such a way that the end effector portion (7) of the at least one kinematic mechanism (4) can be displaced by the clamping device (23) to an end point of the at least one displacement path and clampingly fixed there, so that the end effector portion (7) can be fixed on the robot portion (5) by means of the connecting arrangement (6) and the detent arrangement (19, 20, 21) and the rigid connection can be formed between the robot (2) and the end effector (3).

4. Safety device (1) according to one of claims 1 to 3, **characterized in that** the safety device (1) has at least one retarding element (25), wherein the retarding element (25) is/can be operatively connected to the at least one kinematic mechanism (4) in such a way that the retarding element (25) can exert a retarding force on the end effector portion (7) as soon as the end effector portion (7) is displaced into a retardation portion of the at least one displacement path.

5. Safety device (1) according to one of claims 1 to 4, **characterized in that** the safety device (1) has at least one actuator (33), wherein the actuator (33) is/can be operatively connected to the at least one kinematic mechanism (4) in such a way that the actuator (33) can displace the end effector portion (7) along at least part of the at least one displacement path, such that a position of the end effector (3) relative to the robot (2) can be changed by the safety device (1).

6. Safety device (1) according to one of claims 1 to 5, **characterized in that** the connecting arrangement (6) of the at least one kinematic mechanism (4) of the safety device (1) has a third connecting portion (14) with a third displacement path, wherein the third displacement path has a linear course and extends along a third displacement axis (15), wherein the third displacement axis (15) is oriented perpendicularly to the first displacement axis (11) and the second displacement axis (12), such that the end effector portion (7) can be displaced perpendicularly to the horizontal plane (10) in a vertical direction of the safety device (1).

7. Safety device (1) according to one of claims 1 to 6, **characterized in that** at least one of the sensor elements (16, 17, 18) of the safety device (1) can be operatively connected to a robot controller (26) of the robot (2), such that the robot controller (26) can detect a displacement of the end effector portion (7) relative to the robot portion (5) so that a collision between the end effector (3) and an object (37) having a motion vector deviating from the robot portion (5) can be determined.

8. Safety device (1) according to one of claims 1 to 7, **characterized in that** the safety device (1) is/can be operatively connected to a robot controller (26) of the robot (2) in such a way that the robot controller (26) can control elements of the safety device (1).

9. End effector arrangement (34) for a robot, wherein the end effector arrangement (34) has at least one safety device (1) according to one of claims 1 to 9 as well as an end effector (3), wherein the end effector (3) is fixed on the end effector portion (7) of the safety device (1) and wherein the end effector arrangement (34) can be fixed on the robot (2) by means of the robot portion (5) of the safety device (1).

10. Safety system (35) for a robot, wherein the safety system (35) has at least one safety device (1) according to one of claims 1 to 8 and/or at least one end effector arrangement (34) according to claim 9, wherein the safety system (35) has a safety controller (36), wherein the safety controller (36) is/can be operatively connected to the at least one sensor element (16, 17, 18) of the safety device (1) and/or the end effector arrangement (34), wherein the safety device (1) can detect a displacement of the end effector portion (7) relative to the robot portion (5) using the at least one sensor element (16, 17, 18) and so a collision between the end effector (3) and an object (37) having a motion vector deviating from the robot portion (5) can be determined, wherein the safety controller (36) is/can be operatively connected to the robot controller (26) in such a way that a movement of the robot (2) can be influenced by the safety controller (36).

11. Safety system (35) according to claim 10, **characterized in that** the safety controller (36) is/can be operatively connected to at least one of the detent arrangements (19, 20, 21) in such a way that at least one of the rigid connections between the end effector portion (7) and the robot portion (5) can be formed by the safety controller (36) using at least one of the detent arrangements (19, 20, 21).

12. Safety system (35) according to claim 11, **characterized in that** at least one safety rule (38) is/can be stored on the safety controller (36) of the safety system (35), wherein the safety rule (38) is used to determine at which values of which operating parameters of the robot (2) at least one of the detent arrangements (19, 20, 21) is switched to a locked state in which the at least one detent arrangement (19, 20, 21) is locked and/or at which values of which operating parameters at least one of the detent arrangements (19, 20, 21) is switched to an unlocked state in which the at least one detent arrangement (19, 20, 21) is unlocked.

13. Safety system (35) according to claim 12, **characterized in that** the safety rule (38) is used to define at least one safety volume (39) and at least one working volume (40), wherein the safety rule (38) is used to determine whether at least one of the detent arrangements (19, 20, 21) is switched to the locked state and/or whether at least one of the detent arrangements (19, 20, 21) is switched to the unlocked state if at least one reference point (41) relating to at least one spatial coordinate of the at least one end effector (3) is located within the at least one safety volume (39) or the at least one working volume (40).

## Revendications

1. Dispositif de sécurité (1) destiné à la surveillance anticollision d'un organe terminal (3) mis / pouvant être mis en liaison fonctionnelle avec un robot (2), le dispositif de sécurité (1) présentant au moins un système cinématique (4) doté d'une partie robot, d'un agencement de liaison (6) et d'une partie organe terminal (7), le dispositif de sécurité (1) étant / pouvant être fixé sur le robot (2) au moyen de la partie robot (5) du système cinématique (4), l'organe terminal (3) pouvant être fixé sur la partie organe terminal (7) de l'au moins un système cinématique (4), la partie organe terminal (7) étant montée sur la partie robot (5) au moyen de l'agencement de liaison (6) de l'au moins un système cinématique (4) de telle manière que la partie organe terminal (7) peut être déplacée par rapport à la partie robot (5) au moins le long d'une course de déplacement, l'agencement de liaison (6) de l'au moins un système cinématique (4) du dispositif de sécurité (1) présentant une première partie de liaison (8) avec une première course de déplacement et une deuxième partie de liaison (9) avec une deuxième course de déplacement, la première course de déplacement s'étendant en ligne droite le long d'un premier axe de déplacement (11), la deuxième course de déplacement s'étendant en ligne droite le long d'un deuxième axe de déplacement (12) et le premier axe de déplacement (11) et le deuxième axe de déplacement (12) étant orientés perpendiculairement l'un par rapport à l'autre et se coupant en un point de croisement (13), de telle sorte qu'un plan horizontal (10) du dispositif de sécurité (1) est défini par les axes de déplacement (11, 12), la partie organe terminal (7) pouvant être déplacée parallèlement au plan horizontal (10) et le dispositif de sécurité (1) présentant au moins un élément détecteur (16, 17, 18) au moyen duquel un déplacement de la partie organe terminal (7) par rapport à la partie robot (5) peut être détecté, de telle sorte qu'une collision de l'organe terminal (3) avec un objet (37) qui présente un vecteur de mouvement différent de la partie robot (5) peut être déterminée, le dispositif de sécurité (1) présentant un agencement de blocage (19, 20, 21), **caractérisé en ce qu'**une liaison rigide entre la partie organe terminal (7) et la partie robot (5) peut être réalisée au moyen de l'agencement de blocage (19, 20, 21) de telle sorte qu'une liaison rigide peut être réalisée entre le robot (2) et l'organe terminal (3).

2. Dispositif de sécurité (1) selon la revendication 1, **caractérisé en ce que** l'agencement de blocage (19, 20, 21) présente au moins un dispositif de verrouillage (22), l'au moins un système cinématique (4) pouvant être verrouillé par le dispositif de verrouillage (22) de telle manière que l'agencement de liaison (6) de l'au moins un système cinématique (4) peut être immobilisé sur au moins une position de blocage agencée le long de la course de déplacement respective, de telle sorte que la partie organe terminal (7) peut être fixée sur la partie robot (5) au moyen de l'agencement de liaison (6) et de l'agencement de blocage (19, 20, 21) et la liaison rigide peut être réalisée entre le robot (2) et l'organe terminal (3).

3. Dispositif de sécurité (1) selon l'une des revendications 1 et 2, **caractérisé en ce que** l'agencement de blocage (19, 20, 21) présente au moins un dispositif de serrage (23), le dispositif de serrage (23) permettant d'agir sur l'au moins un système cinématique (4) de telle manière que la partie organe terminal (7) de l'au moins un système cinématique (4) peut être déplacée jusqu'à un point final de l'au moins une course de déplacement au moyen du dispositif de serrage (23) et y être fixée par serrage, de telle sorte que la partie organe terminal (7) peut être fixée sur la partie robot (5) au moyen de l'agencement de liaison (6) et de l'agencement de blocage (19, 20, 21) et la liaison rigide peut être réalisée entre le robot (2) et l'organe terminal (3).

4. Dispositif de sécurité (1) selon l'une des revendications 1 à 3, **caractérisé en ce que** le dispositif de sécurité (1) présente au moins un élément décélérateur (25), l'élément décélérateur (25) étant / pouvant être mis en liaison fonctionnelle avec l'au moins un système cinématique (4) de telle manière qu'un effort décélérateur peut être exercé par l'élément décélérateur (25) sur la partie organe terminal (7) dès que la partie organe terminal (7) est déplacée dans une partie de décélération de l'au moins une course de déplacement.

5. Dispositif de sécurité (1) selon l'une des revendications 1 à 4, **caractérisé en ce que** le dispositif de sécurité (1) présente au moins un actionneur (33), l'actionneur (33) étant / pouvant être mis en liaison fonctionnelle avec l'au moins un système cinématique (4) de telle manière que la partie organe terminal (7) peut être déplacée au moyen de l'actionneur (33) au moins sur certaines parties le long de l'au moins une course de déplacement, de telle sorte qu'une position de l'organe terminal (3) par rapport au robot (2) peut être modifiée au moyen du dispositif de sécurité (1).

6. Dispositif de sécurité (1) selon l'une des revendications 1 à 5, **caractérisé en ce que** l'agencement de liaison (6) de l'au moins un système cinématique (4) du dispositif de sécurité (1) présente une troisième partie de liaison (14) avec une troisième course de déplacement, la troisième course de déplacement présentant un tracé rectiligne et s'étendant le long d'un troisième axe de déplacement (15), le troisième axe de déplacement (15) étant orienté perpendiculairement au premier axe de déplacement (11) et au deuxième axe de déplacement (12), de telle sorte que la partie organe terminal (7) peut être déplacée perpendiculairement au plan horizontal (10) dans une direction verticale du dispositif de sécurité (1) .

7. Dispositif de sécurité (1) selon l'une des revendications 1 à 6, **caractérisé en ce qu'**au moins un des éléments détecteurs (16, 17, 18) du dispositif de sécurité (1) peut être mis en liaison fonctionnelle avec une commande de robot (26) du robot (2), de telle sorte qu'un déplacement de la partie organe terminal (7) par rapport à la partie robot (5) peut être détecté par la commande de robot (26) et ainsi une collision de l'organe terminal (3) avec un objet (37) qui présente un vecteur de mouvement différent de la partie robot (5) peut être déterminée.

8. Dispositif de sécurité (1) selon l'une des revendications 1 à 7, **caractérisé en ce que** le dispositif de sécurité (1) est / peut être mis en liaison fonctionnelle avec une commande de robot (26) du robot (2) de telle manière que des éléments du dispositif de sécurité (1) peuvent être commandés par la commande de robot (26).

9. Agencement d'organe terminal (34) pour un robot, l'agencement d'organe terminal (34) présentant au moins un dispositif de sécurité (1) selon l'une des revendications 1 à 9 ainsi qu'un organe terminal (3), l'organe terminal (3) étant fixé sur la partie organe terminal (7) du dispositif de sécurité (1) et l'agencement d'organe terminal (34) pouvant être fixé sur le robot (2) au moyen de la partie robot (5) du dispositif de sécurité (1).

10. Système de sécurité (35) pour un robot, le système de sécurité (35) présentant au moins un dispositif de sécurité (1) selon l'une des revendications 1 à 8 et/ou au moins un agencement d'organe terminal (34) selon la revendication 9, le système de sécurité (35) présentant une commande de sécurité (36), la commande de sécurité (36) étant / pouvant être mise en liaison fonctionnelle avec l'au moins un élément détecteur (16, 17, 18) du dispositif de sécurité (1) et/ou de l'agencement d'organe terminal (34), un déplacement de la partie organe terminal (7) par rapport à la partie robot (5) pouvant être détecté par le dispositif de sécurité (1) au moyen de l'au moins un élément détecteur (16, 17, 18) et ainsi une collision de l'organe terminal (3) avec un objet (37) qui présente un vecteur de mouvement différent de la partie robot (5) pouvant être déterminée, la commande de sécurité (36) étant / pouvant être mise en liaison fonctionnelle avec la commande de robot (26) de telle manière qu'un mouvement du robot (2) peut être influencé par la commande de sécurité (36) .

11. Système de sécurité (35) selon la revendication 10, **caractérisé en ce que** la commande de sécurité (36) est / peut être mise en liaison fonctionnelle avec au moins un des agencements de blocage (19, 20, 21) de telle manière qu'au moins une des liaisons rigides entre la partie organe terminal (7) et la partie robot (5) peut être réalisée par la commande de sécurité (36) au moyen d'au moins un des agencements de blocage (19, 20, 21).

12. Système de sécurité (35) selon la revendication 11, **caractérisé en ce qu'**au moins une règle de sécurité (38) est / peut être enregistrée sur la commande de sécurité (36) de système de sécurité (35), ladite règle de sécurité (38) permettant de déterminer pour quelles valeurs de quels paramètres de fonctionnement du robot (2) au moins un des agencements de blocage (19, 20, 21) est transféré dans un état de verrouillage, dans lequel l'au moins un agencement de blocage (19, 20, 21) est bloqué, et/ou et pour quelles valeurs de quels paramètres de fonctionnement au moins un des agencements de blocage (19, 20, 21) est transféré dans un état de déverrouillage, dans lequel l'au moins un agencement de blocage (19, 20, 21) est déverrouillé.

13. Système de sécurité (35) selon la revendication 12, **caractérisé en ce qu'**au moins un volume de sécurité (39) et au moins un volume de travail (40) sont définis par la règle de sécurité (38), la règle de sécurité (38) permettant de déterminer si au moins un des agencements de blocage (19, 20, 21) est transféré dans l'état de verrouillage et/ou si au moins un des agencements de blocage (19, 20, 21) est transféré dans l'état de déverrouillage quand au moins un point de référence (41), qui est en rapport avec au moins une coordonnée spatiale de l'au moins un organe terminal (3), est disposé à l'intérieur de l'au moins un volume de sécurité (39) ou de l'au moins un volume de travail (40).
